# FASCICULE DE BREVET EUROPEEN

(11) **EP 2 087 765 B1**
(45) Date de publication et mention de la délivrance du brevet: **26.12.2012**
(21) Numéro de dépôt: 07866515.5
(22) Date de dépôt: 29.10.2007
(51) Int. Cl.: H04W 8/00

(54) **DETECTION AUTOMATIQUE D'UNE PASSERELLE RESIDENTIELLE DU TYPE SYSTEME DE TELECOMMUNICATION MOBILE UNIVERSEL**
AUTOMATISCHE ERKENNUNG EINES RESIDENTEN GATEWAYS FÜR EIN UNIVERSELLES MOBILTELEKOMMUNIKATIONSSYSTEM
AUTOMATICALLY DETECTING A RESIDENT GATEWAY OF THE UNIVERSAL MOBILE TELECOMMUNICATION SYSTEM TYPE

(30) Priorité: 27.10.2006 FR 0654611
(43) Date de publication de la demande: 12.08.2009
(73) Titulaire: FRANCE TELECOM, 75015 Paris (FR)
(72) Inventeur: BENALI, Nasr, 92400 Courbevoie (FR)
(86) Numéro de dépôt international: PCT/FR2007/052273
(87) Numéro de publication internationale: WO 2008/053120

(56) Documents cités:
- WO-A-2005/029344
- WO-A-2006/027772
- US-A1- 2004 249 915
- US-A1- 2006 092 890
- US-A1- 2006 121 914
- US-A1- 2006 148 486

## Description

L'invention s'inscrit dans le domaine des télécommunications et concerne une procédure de sélection d'un réseau cellulaire public, ou en anglais: Public Land Mobile Network (PLMN) dans un réseau du type système de télécommunication mobile universel. Un tel système est connu en anglais sous l'expression: Universal Mobile Telecommunications System (UMTS). Un réseau cellulaire public est un réseau mobile opéré par un operateur particulier sur un territoire. L'invention concerne également une procédure de sélection de cellule dans un réseau cellulaire public de type système de télécommunication mobile universel. L'invention concerne également un mécanisme spécifique des cartes d'identification d'abonné. Les cartes d'identification d'abonné compatibles au système de télécommunication mobile universel sont connues en anglais sous l'expression: Universal Subscriber Identity Modules (USIM). Les cartes d'identification de l'abonné sont des cartes à puce avec une mémoire non volatile contenant les informations fixes et variables spécifiques à l'abonné et un microcontrôleur. Les cartes d'identification de l'abonné sont délivrées par l'opérateur mobile lors de l'abonnement. Certaines cartes d'identification d'abonné permettent l'utilisation d'un mécanisme d'émission de commandes à un terminal mobile. Une spécification décrivant ce mécanisme, et définissant le jeu de commandes qu'une carte d'identification d'abonné peut émettre à un terminal mobile, est connue par l'homme du métier par son abréviation anglaise USAT, pour: USIM Application Toolkit ou en français: jeu d'outils pour les applications de la carte d'identification d'abonné. L'invention concerne également ce mécanisme.

Dans un réseau de type système de télécommunication mobile universel, il est possible que plusieurs réseaux cellulaires publics soient disponibles au même temps et au même endroit. Par exemple un réseau cellulaire public macro du type système de télécommunication mobile universel et un réseau cellulaire public associé à une passerelle résidentielle ou à plusieurs passerelles résidentielles du type système de télécommunication mobile universel peuvent être simultanément disponibles. Un réseau cellulaire public macro constitue le réseau national de type système de télécommunication mobile universel d'un opérateur donné. Une passerelle résidentielle de type système de télécommunication mobile universel est munie d'une carte radio compatible au système de télécommunication mobile universel. Un terminal mobile compatible au système de télécommunication mobile universel considéra ladite passerelle résidentielle comme une cellule radio du type système de télécommunication mobile universel. Un terminal mobile compatible avec un tel système de télécommunication mobile universel recevra les réseaux cellulaires publics disponibles s'il se trouve sous leurs couvertures. Les passerelles résidentielles du type système de télécommunication mobile universel constituent un réseau radio parallèle au réseau radio macro du type système de télécommunication mobile universel. Une couverture radio d'une antenne du réseau cellulaire public macro peut couvrir plusieurs couvertures radios des cellules définies par les passerelles résidentielles se trouvant dans la même zone géographique.
Il est important qu'un terminal mobile propre à un abonné et compatible avec le système de télécommunication mobile universel puisse sélectionner un réseau cellulaire public associé aux passerelles résidentielles du type système de télécommunication mobile universel une fois que le terminal mobile est sous la couverture radio de la cellule définie par la passerelle résidentielle de l'abonné et s'enregistrer auprès du réseau. La raison de ce besoin est la suivante: une connexion entre le terminal mobile et le réseau cellulaire public associé aux passerelles résidentielles permet à l'abonné de communiquer via une ligne d'abonné numérique à débit asymétrique, ou en anglais: Asymmetric Digital Subscriber Line (ADSL), avec laquelle la passerelle résidentielle est liée. A la différence du réseau cellulaire macro du type système de télécommunication mobile universel, cette offre permet à l'abonné de bénéficier d'une gamme plus large de services pour un prix plus bas. Ceci revient à l'utilisation de la ligne d'abonné numérique à débit asymétrique ainsi que de l'infrastructure basée sur le protocole de transport internet, en anglais: Internet protocol (IP), à la place de l'infrastructure existante du réseau cellulaire public macro pour le transport des messages de données de l'abonné (e.g. les trames de la parole et les paquets des données de l'abonné_{;}...etc.).
Aussi, un terminal mobile compatible au système de télécommunication mobile universel qui s'est préalablement enregistré au réseau cellulaire public associé aux passerelles résidentielles du type système de télécommunication mobile universel doit continuer à utiliser ce réseau jusqu'à ce qu'il perde la couverture de la cellule définie par la passerelle résidentielle.

Pour garantir l'attachement d'un terminal mobile compatible au système de télécommunication mobile universel à la passerelle résidentielle du type système de télécommunication mobile universel, il est connu de l'art antérieur les alternatives suivantes:
- Alternative 1: Définir l'ensemble des passerelles résidentielles du type système de télécommunication mobile universel comme un réseau cellulaire public associé aux passerelles résidentielles ayant le même code réseau cellulaire public que le réseau cellulaire public macro. De cette façon, la cellule radio définie par la passerelle résidentielle sera considérée par le terminal mobile comme une cellule du réseau cellulaire public macro. Dans ce cas, le terminal mobile utilisera la procédure de re-sélection des cellules, ou en anglais: Cell Reselection procedure, afin de s'attacher à la passerelle résidentielle. Le terminal mobile considère alors la qualité/force du signal reçu du réseau cellulaire public macro et de la cellule définie par la passerelle résidentielle. Quand le terminal mobile entre sous la couverture de la cellule définie par la passerelle résidentielle en mode veille, la qualité du signal de la cellule définie par la passerelle résidentielle est mesurée (car cette cellule sera déclaré comme étant voisine des cellules du réseau cellulaire public macro). Si la qualité/force de la cellule définie par la passerelle résidentielle deviennent meilleures que celles des cellules du réseau macro le terminal mobile déclenchera la procédure de re-sélection des cellules et sélectionnera la cellule définie par la passerelle résidentielle. Un inconvénient de cette alternative est que la sélection de la cellule définie par la passerelle résidentielle n'est pas garantie. En effet, Le terminal mobile considère la qualité/force du signal reçu pour choisir la cellule candidate durant la procédure de re-sélection des cellules. Si le signal du réseau cellulaire public macro a des caractéristiques meilleures que celles du signal de la cellule définie par la passerelle résidentielle le terminal mobile ne sélectionnera pas la cellule définie par la passerelle résidentielle et restera sur le réseau cellulaire public macro. Ces cas peuvent se produire quand par exemple le terminal mobile se trouve suffisamment proche de l'antenne du réseau cellulaire public macro de façon à rendre le signal du réseau cellulaire public macro suffisamment fort pour retenir le terminal mobile sur le réseau cellulaire public macro.
- Alternative 2: Définir l'ensemble des passerelles résidentielles du type système de télécommunication mobile universel comme un réseau cellulaire public associé aux passerelles résidentielles ayant un code réseau cellulaire public dédié, distinct du code réseau cellulaire public du réseau cellulaire public macro. Le réseau cellulaire public associé aux passerelles résidentielles sera déclaré pour le terminal mobile comme le réseau cellulaire public de domicile, ou en anglais: Home PLMN (HPLMN). Le réseau cellulaire public macro sera déclaré pour le terminal mobile comme un réseau cellulaire public visité, ou en anglais: Visited PLMN (VPLMN). La situation sera similaire à une itinérance nationale, ou en anglais: national roaming, lorsque le terminal mobile sera sous la couverture du réseau cellulaire public macro. Un inconvénient de cette alternative est que le terminal mobile ne tentera de sélectionner la cellule définie par la passerelle résidentielle qu'après une temporisation (de 6 minutes à 8 heures) correspondante à la durée de vie du compteur de la recherche périodique du réseau cellulaire public de domicile. La sélection n'est donc pas immédiate. Une fois que la temporisation expire la procédure de sélection du réseau cellulaire public sera déclenchée dans le terminal mobile en mode automatique. Ensuite le terminal mobile sélectionnera le réseau cellulaire public associé aux passerelles résidentielles. Un autre inconvénient revient à la nécessite de provisionner l'abonné avec une nouvelle carte d'identification d'abonné ce qui exclut la possibilité de réutiliser les cartes d'indentification d'abonné existantes. Aussi, l'introduction d'un nouveau code réseau cellulaire public de domicile nécessité de revoir les accords d'itinérance entre l'opérateur qui commercialisera le service et tous les operateurs avec qui il a des accords d'itinérance afin de permettre aux nouveaux abonnés de bénéficier du service d'itinérance. De plus, il est nécessaire de mettre à jour les noeuds du réseau cellulaire public macro afin de tenir compte de l'introduction de ces nouvelles cartes d'identification d'abonné.
- Alternative 3: Définir l'ensemble des passerelles résidentielles du type système de télécommunication mobile universel comme un réseau cellulaire public associé aux passerelles résidentielles ayant un code réseau cellulaire public dédié, distinct du code réseau cellulaire public du réseau cellulaire public macro. Le réseau cellulaire public macro sera déclaré pour le terminal mobile comme le réseau cellulaire public de domicile. Le réseau cellulaire public associé aux passerelles résidentielles sera déclaré pour le terminal mobile comme un réseau cellulaire public visité. La situation sera similaire à une itinérance nationale lorsque le terminal mobile sera sous la couverture de la cellule définie par sa passerelle résidentielle.
Le réseau cellulaire public associé aux passerelles résidentielles n'étant pas le réseau cellulaire public de domicile de l'abonné, le terminal mobile ne va pas déclencher automatiquement l'opération de sélection du réseau cellulaire public, ou en anglais: PLMN selection, que si le réseau cellulaire public macro n'est pas disponible (parce que le réseau cellulaire public macro est déclaré comme étant le réseau cellulaire public de domicile). Si la couverture du réseau cellulaire public macro est disponible avec une qualité acceptable, le terminal mobile restera sur le réseau cellulaire public macro. L'abonné peut sélectionner manuellement le réseau cellulaire public associé aux passerelles résidentielles. Dans ce cas, l'abonné, par exemple quand il rentre dans sa résidence, déclenchera depuis le menu de son terminal mobile la procédure de sélection du réseau cellulaire public en mode manuel, ou en anglais: "PLMN selection in manual mode". Le terminal mobile affichera les réseaux cellulaires publics disponibles et l'abonné pourra sélectionner le réseau cellulaire public associé aux passerelles résidentielles. La procédure de sélection du réseau cellulaire public en mode manuel forcera le terminal mobile à s'attacher à la passerelle résidentielle. Le terminal mobile après l'enregistrement au réseau cellulaire public associé aux passerelles résidentielles ne va pas tenter de sélectionner les cellules du réseau cellulaire macro même si celles-ci auront de meilleures qualité/force du signal que celles de la cellule définie par la passerelle résidentielle.
La procédure décrite ci-dessus est déterministe. Le terminal mobile s'attachera sûrement au réseau cellulaire public associé aux passerelles résidentielles indépendamment de la qualité/force du signal de ce dernier (à condition que la qualité et la force du signal soient suffisantes afin de rendre le service sur le réseau cellulaire public associé aux passerelles résidentielles) et du réseau macro.
Un inconvénient est que le processus n'est pas automatisé: l'abonné doit, à chaque fois qu'il veut se connecter au réseau cellulaire public associé aux passerelles résidentielles via sa passerelle résidentielle, déclencher manuellement la procédure de sélection du réseau cellulaire public en mode manuel. Il doit également débloquer manuellement le mode manuel lorsqu'il perd la couverture de la cellule définie par sa passerelle résidentielle afin que le terminal mobile revienne sur le réseau cellulaire public macro.

L'invention vise à pallier à des inconvénients mentionnées ci-dessus en proposant une sélection automatique et immédiate du réseau cellulaire public associé aux passerelles résidentielles dès que disponible.
Il n'est actuellement pas prévu d'enregistrer automatiquement un déclencheur. Le mot "déclencheur" est ici à comprendre comme une valeur spécifique pour un paramètre dans la mémoire d'un terminal mobile, qui, dès que la valeur reçu par le terminal mobile pour ce paramètre, égale cette valeur spécifique enregistrée, déclenchera un procédé d'attachement du terminal mobile au réseau cellulaire public associé aux passerelles résidentielles.
Ceci présente également un inconvénient. L'invention propose aussi un enregistrement préalable et automatique d'un déclencheur pour ce procédé.
Le document US 2006/121914 décrit une méthode de sélection d'un système réseau pour l'accès à un réseau prédéterminé, dans laquelle plusieurs systèmes réseaux hétérogènes sont connectés à un même réseau.
Le document WO 2006/027772 prévoit un système d'interconnexion entre réseau cellulaire et non cellulaire permettant à un terminal mobile de passer de l'un à l'autre librement.
L'invention se rapporte à un procédé selon la revendication 1, un support de données selon la revendication 4 et un terminal mobile selon la revendication 5.
Cette invention a l'avantage suivant: pour enregistrer un identifiant, par exemple une zone de localisation, dans la mémoire du terminal, par exemple un terminal mobile muni d'une carte d'identification d'abonné (afin d'armer dans cette carte d'identification de l'abonné la zone de localisation), aucune intervention de l'abonné n'est nécessaire. La procédure d'armement d'une zone de localisation est ainsi automatisée. Des mémoires existantes, par exemple la mémoire des cartes d'identification d'abonné peuvent être réutilisées.
Un autre avantage est que le terminal mobile n'essaie de se connecter au réseau de communication via, par exemple une passerelle résidentielle, que lorsque cette passerelle résidentielle est dans la zone géographique (i.e. définie par la zone de localisation d'un réseau cellulaire public) dans laquelle le terminal mobile se trouve. Le terminal mobile détecte en fonction de la réception de l'identifiant de la zone de localisation du réseau cellulaire public macro qu'il se trouve à proximité de la passerelle résidentielle et ne lancera l'activité de recherche radio qu'à ce moment là. Ceci évite un gaspillage d'énergie de la batterie du terminal mobile lié au lancement de l'activité de recherche radio (i.e. c'est-à-dire des essais inutiles parce que le terminal mobile ne se trouve pas proche de la passerelle résidentielle).
Dans un mode de réalisation, le procédé comprend en outre une étape d'enregistrement d'au moins un deuxième identifiant dans les moyens de mémorisation inclus dans ledit premier dispositif, laquelle étape devant être exécutée sur requête d'un abonné.
Ceci présente l'avantage que le procédé permet également d'enregistrer plusieurs zones de localisations correspondant à des points d'accès différent (e.g. résidence principale et résidence secondaire d'un abonné donné), à la demande de l'abonné i.e. l'abonné sélectionne un item dans le menu de son terminal mobile. Ceci permettrait de réduire la consommation de la batterie du terminal mobile et offre une flexibilité à la solution car le procédé reste effective sur plusieurs accès se situant sur des localisations différentes.
Dans un autre mode de réalisation, le procédé comprend en outre une étape de suppression d'au moins un identifiant enregistré dans les moyens de mémorisation inclus dans le premier dispositif, laquelle étape devant être exécutée sur requête d'un abonné.
Avantageusement, en cas de besoin, par exemple suite à un déménagement de l'abonné, il est possible de supprimer une zone de localisation afin d'éviter que le premier terminal essaie de se connecter à une passerelle résidentielle quand il reçoit l'identifiant d'une ancienne zone de localisation.
Dans un autre mode de réalisation ce procédé est un procédé d'enregistrement d'au moins une zone de localisation dans des moyens de mémorisation inclus dans un premier dispositif de communication:
Le procédé comprend
- une étape d'enregistrement, dans un système lié à un deuxième dispositif de communication, d'au moins un deuxième identifiant représentatif dudit premier dispositif,
- une étape d'essai de sélection d'un réseau de communication associé audit deuxième dispositif, et, en cas de sélection réussie,
- une étape d'enregistrement de ladite zone de localisation dans les moyens de mémorisation inclus dans ledit premier dispositif.
Dans un mode de réalisation, le procédé décrit ci-dessus est caractérise en ce que le procédé comprend en outre une étape d'enregistrement d'au moins une deuxième zone de localisation dans les moyens de mémorisation inclus dans le premier dispositif, laquelle étape devant être exécutée sur requête d'un abonné.
Dans un autre mode de réalisation ce procéde est un procède de connexion d'un premier dispositif à un réseau de communication associé à un deuxième dispositif. Le procédé comprend:
- une étape de notification par ledit premier dispositif vers une carte à puce d'un changement de zone de localisation,
- une étape de vérification d'un identifiant reçu par ledit premier dispositif et représentatif pour une zone de localisation et un identifiant enregistré préalablement dans ladite carte à puce et représentatif pour une zone de la localisation,
   en cas de correspondance entre l'identifiant reçue et l'identifiant enregistré
- une étape de balayage radio, et
- une étape d'attachement dudit premier terminal au réseau de communication associé audit deuxième dispositif.
Ce procédé a les avantages suivants. Un avantage du procédé est que la sélection de la passerelle résidentielle est immédiate et déterministe (i.e. le terminal mobile une fois qu'il entre sous la couverture radio de la cellule définie par la passerelle résidentielle s'attachera immédiatement à la passerelle résidentielle). Un autre avantage du procédé est qu'il est complètement automatisé et ne nécessite pas l'intervention de l'abonné. Un autre avantage du procédé est qu'il n'introduit aucun impact sur le réseau cellulaire public macro de l'opérateur qui commercialisera le service. Un autre avantage du procédé est que les abonnées au service peuvent utiliser le service d'itinérance sur n'importe quel réseau cellulaire public pour lequel l'opérateur qui commercialisera le service a un accord d'itinérance. Ceci ne nécessite pas la revue des accords d'itinérances existants. Un autre avantage du procédé est qu'il permet la réutilisation des cartes d'identifications d'abonné existantes donc il ne nécessite aucun échange ou provision de nouvelles cartes d'identification d'abonné lors de l'abonnement. Un autre avantage du procédé est qu'il permet également la réutilisation des terminaux mobiles existants.

L'invention concerne également un support de données sur lequel ont été mémorisées des instructions de code de programme aptes à provoquer une mise en oeuvre d'un procédé conforme à l'une quelconque des procédés décrits ci-dessus, lorsque ledit programme est exécuté sur un ordinateur.

L'invention sera mieux comprise à l'aide de la description suivante, faite à titre d'exemple non-limitatif et en regard des dessins annexés, dans lesquels:
- la figure 1 est un schéma fonctionnel décrivant un premier aspect de l'invention, et
- la figure 2 est un schéma fonctionnel décrivant un deuxième aspect de l'invention.

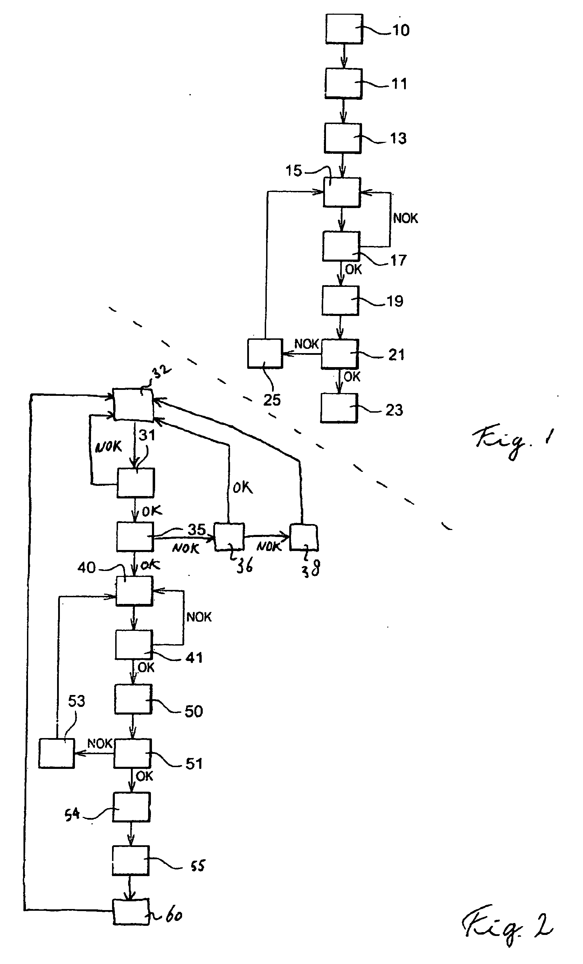

La description par rapport à la figure 1 se base sur la supposition suivante: le réseau cellulaire public macro sera déclaré pour le terminal mobile comme le réseau cellulaire public de domicile. Le réseau cellulaire public associé aux passerelles résidentielles sera déclaré pour le terminal mobile comme un réseau cellulaire public visité. La situation sera similaire à une itinérance nationale lorsque le terminal mobile sera sous la couverture de la cellule définie par sa passerelle résidentielle. Le réseau cellulaire public associé aux passerelles résidentielles aura un code réseau cellulaire public distinct de celui du réseau cellulaire public macro.

L'invention se compose des mécanismes suivants:
- mécanisme de déclenchement de la procédure de sélection du réseau cellulaire public en mode manuel ou en mode automatique
- mécanisme de recherche périodique du réseau cellulaire public associé aux passerelles résidentielles
- mécanisme d'activation de la logique du service de la sélection de la passerelle résidentielle en fonction de la zone de localisation courante du terminal mobile
- mécanisme d'enregistrement des zones de localisation qui serviront en tant que déclencheurs du processus.

Le procédé se base principalement sur le principe des cartes d'identification d'abonné proactives, ou en anglais: "USIM proactive cards concept", ainsi que l'utilisation de jeu de commandes AT. voir les spécifications 3GPP TS 31.111 et TS 27.007.

Le procédé nécessite le provisionnement d'une applet dans les cartes d'identification d'abonné existantes. Une applet est une application de taille réduite. La logique de service d'une applet ne peut pas être exécutée par l'applet elle même et nécessite un appel depuis une autre application. Le provisionnement de l'applet peut être fait en utilisant le mécanisme connu en anglais par l'homme du métier sous l'expression: Over The Air (OTA) provisionning, ou bien en utilisant un dispositif d'écriture/lecture de cartes.

L'ensemble des passerelles résidentielles est géré par des noeuds de concentration localisés dans le réseau internet d'un opérateur donné. L'ensemble des passerelles résidentielles et des noeuds de concentration constitue un système de communication ayant ses propres bases de données contenant les informations systèmes et les informations de l'abonné (e.g. un identifiant de l'abonné fait partie de ces informations de l'abonné).

Par rapport à la figure 1, selon l'invention, le processus comprend les étapes suivantes: Durant l'étape 10, un identifiant de l'abonné est provisionné (ou enregistré) dans le système qui gère les passerelles résidentielles. Le provisionnement de cet identifiant peut être fait au moment de l'achat d'une passerelle résidentielle dans un point de vente. Cet identifiant est l'identité internationale d'un abonné mobile, ou en anglais: International Mobile Subscriber Identity (IMSI). L'identité internationale d'un abonné mobile est une donnée qui est enregistrée dans la carte d'identification d'abonné. Un contrôle d'accès au niveau du système qui gère les passerelles résidentielles est possible. A une passerelle donnée, une liste d'identifiants d'abonnés peut être fixée et un contrôle d'accès peut opérer au niveau du système qui gère les passerelles résidentielles durant la phase d'enregistrement du terminal mobile à la passerelle résidentielle.

Le système qui gère les passerelles résidentielles contiendra après l'exécution de l'étape 10 une liste d'identifiants d'abonnés autorisés à s'enregistrer au réseau cellulaire public associé aux passerelles résidentielles depuis une passerelle résidentielle donnée. Durant une tentative d'enregistrement d'un abonné à une passerelle résidentielle un mécanisme de contrôle d'accès est prévu: le terminal mobile envoie l'identifiant de l'abonné durant la tentative d'enregistrement à une passerelle résidentielle. Le système qui gère les passerelles résidentielles vérifie la liste (associée à la passerelle résidentielle) d'identifiants d'abonnés afin de déterminer si l'identifiant de l'abonné envoyé par le terminal mobile est un identifiant autorisé, c'est-à-dire un identifiant qui a été provisionné durant l'abonnement dans le système qui gère les passerelles résidentielles. Si l'identifiant de l'abonné n'est pas autorisé, le terminal mobile sera rejeté de la passerelle résidentielle.

Après l'étape 10, le processus comprend une étape 11 de chargement de l'applet sur la carte d'identification d'abonné. L'applet peut être téléchargée sur la carte d'identification d'abonné en utilisant le procédé appelé en anglais: "Over The Air (OTA) provisioning", qui consiste à utiliser des messages courts binaires, ou en anglais binary SMS, afin de télécharger l'applet dans la carte d'identification d'abonné depuis un serveur se trouvant dans le réseau cellulaire public macro de l'opérateur. Une alternative consiste à télécharger directement l'applet à l'aide d'un dispositif d'écriture/lecture de carte dans un point de vente.

Après l'étape 11 le processus comprend une étape 13 d'activation de l'applet.

Après l'étape 13 d'activation de l'applet, le processus comprend une étape 15 qui concerne l'opération de balayage radio. Pendant l'étape 15, l'applet lance une opération de balayage radio, en déclenchant les fonctions radio du terminal mobile, afin de connaître les réseaux cellulaires publics disponibles. L'opération du balayage radio est périodique de période T minutes ajustable et variable.

Rappel: Un réseau cellulaire public est associé au réseau constitué de passerelles résidentielles de type système de télécommunications mobile universel.

Pendant une étape 17 de vérification, après avoir effectué l'opération 15 de balayage radio, l'applet vérifie si le réseau cellulaire public associé aux passerelles résidentielles est disponible i.e. en d'autres termes l'applet vérifie si le terminal mobile se trouve sous la couverture radio de la cellule définie par une des passerelles résidentielles. Si c'est le cas, l'applet déclenche alors, lors d'une étape 19 de sélection du réseau cellulaire public, une procédure de sélection du réseau cellulaire public en mode manuel et passe à l'étape 21. Sinon l'applet passe à l'étape 15.
L'applet doit connaitre le réseau cellulaire public associé aux passerelles résidentielles, i.e. le nom du réseau cellulaire public codé en format alphanumérique doit être mémorisé dans la mémoire de la carte d'identification d'abonné afin que l'applet puisse l'utiliser.

Pendant l'étape 21, le terminal mobile essaye de s'enregistrer à la passerelle résidentielle.
Si la sélection du réseau cellulaire public associé aux passerelles résidentielles se déroule avec succès (i.e. c'est-à-dire que le terminal mobile sélectionne avec succès le réseau cellulaire public associé aux passerelles résidentielles, s'enregistre au réseau cellulaire public associé aux passerelles résidentielles avec succès, s'attache à la passerelle résidentielle avec succès (i.e. le contrôle d'accès a été positif) et notifie sa nouvelle zone de localisation au réseau cellulaire public associé aux passerelles résidentielles) l'applet enregistre alors la zone de localisation courante, ou en anglais Location Area (LA), du terminal mobile afin de l'utiliser pendant les prochaines sélections de la passerelle résidentielle. La zone de localisation enregistrée correspond à la zone de localisation courante où se trouve le terminal mobile dans le réseau cellulaire public macro (Note: Un réseau cellulaire public est divisé en zones de localisation pour le mode circuit. Le terminal mobile informe le réseau cellulaire public de sa présence dans une zone de localisation périodiquement ou bien quand il change de zone de localisation. La position de la station mobile n'est donc connue qu'à la zone de localisation près par le réseau cellulaire public). L'enregistrement par l'applet de la zone de localisation courante du terminal mobile est également appelé armement de la zone de localisation dans ce document. Cet enregistrement se déroule pendant une étape 23 d'enregistrement. Cette zone de localisation constituera le déclencheur de l'étape 40 pendant les prochaines sélections. En d'autres termes le terminal mobile n'essayera de s'attacher à la passerelle résidentielle que lorsqu'il entre dans la zone de localisation spécifique qui a été enregistrée durant l'étape 23. Cette zone de localisation constitue un indicateur géographique de localisation, par exemple un indicateur de la localisation de la résidence d'un abonné donné (i.e. si la sélection du réseau cellulaire public associé aux passerelles résidentielles a été effectuée avec succès cela revient à dire que le contrôle d'accès effectué pendant l'étape 21 a été effectué avec succès. Par conséquent l'abonné est autorisé en accès sur cette passerelle résidentielle).
Au lieu de la zone de localisation, il est également possible d'utiliser comme déclencheur un paramètre qui sera désigné avec l'expression "zone de routage" (de l'expression anglaise "Routing Area") ou un paramètre qui sera désigné avec l'expression "valeur de l'identificateur de la cellule" (de l'expression anglaise "Cell Identity Value"). Tout autre indicateur géographique, c'est-à-dire un paramètre dont la valeur change d'une localisation à l'autre peut également être utilisé. La valeur de ce paramètre à proximité d'une passerelle résidentielle donné doit être enregistrée par l'applet.

Si l'essai de sélection de la passerelle résidentielle échoue, le terminal mobile sera rejeté de la passerelle résidentielle. Le rejet se déroule pendant une étape 25 de rejet. La cause d'échec sera la suivante: cause de rejet numéro 15 "Pas de Cellules Appropriée Dans La Zone De Localisation, ou en anglais: rejection cause number 15 "No Suitable Cells in Location Area". L'applet sera notifiée de l'échec de l'opération de sélection et déclenchera la procédure de sélection du réseau cellulaire public en mode automatique. L'applet passe ensuite à l'étape 15.

Les étapes 15, 17, 19, 21 et 25 correspondent au processus de recherche initiale de la passerelle résidentielle. Cette recherche est périodique. L'applet pendant l'exécution des étapes 15, 17, 19, 21 et 25 n'a pas connaissance de la zone de localisation qui couvre la passerelle résidentielle de l'abonné.
L'applet va continuer à alterner les opérations suivantes [Recherche Périodique (étape 15), Vérification des réseaux cellulaires publics disponibles (étape 17), et en cas de disponibilité du réseau cellulaire public associé aux passerelles résidentielles, Sélection Manuelle (étape 19), et en cas de rejet, Sélection Automatique (étape 25) ] jusqu'à ce que le terminal mobile s'enregistre avec succès sur une passerelle résidentielle. L'applet à ce moment là enregistrera la zone de localisation courante dans la mémoire de la carte d'identification d'abonné. Lorsque la zone de localisation est enregistrée, l'applet ne va pas recommencer l'exécution des étapes 15, 17, 19, 21 et 25 sauf si l'abonné déclenche manuellement le processus de recherche initiale de la passerelle résidentielle (cf. un mode de réalisation décrit ci-dessous).

Dans un mode de réalisation, il est possible de lancer les étapes 15, 17, 19, 21 et 25 à nouveau et à la demande de l'abonné. Ceci permet à l'applet, quand un abonné se connecte depuis, plusieurs localisations différentes d'enregistrer les zones de localisation qui correspondent à ces localisations dans la mémoire de la carte d'identification d'abonné e.g. par exemple une zone de localisation, ou en anglais: Location Area (LA), LA1 qui correspond à la localisation de la résidence principale de l'abonné et une zone de localisation LA2 qui correspond à la localisation de la résidence secondaire de l'abonné. Les deux zones de localisations seront enregistrées dans la mémoire de la carte d'identification d'abonné. La première zone de localisation, i.e. LA1, sera enregistrée automatiquement quand l'applet sera activée. La seconde zone de localisation, i.e. LA2, sera enregistrée après le lancement manuel par l'abonné de la procédure de recherche initiale de la passerelle résidentielle. Dans cet exemple, pendant les prochaines sélections de la passerelle résidentielle, un balayage radio (étape 40, voir ci-dessous) sera activé uniquement lorsque le terminal mobile entre dans l'une des deux zones de localisation enregistrées dans la mémoire de la carte d'identification d'abonné.

Afin de permettre à l'abonné de lancer une nouvelle fois le mécanisme de recherche initiale du réseau cellulaire public associé aux passerelles résidentielles (i.e. la logique du service correspondant aux étapes 15, 17, 19, 21 et 25), l'applet peut envoyer au terminal mobile une commande proactive afin de forcer le rajout d'un item dans le menu du terminal mobile. Quand l'abonné sélectionne cet item l'applet sera notifiée et peut donc déclencher la logique appropriée i.e. déroulement des étapes 15, 17, 19, 21 et 25 et enregistrement de la seconde zone de localisation.

Un deuxième aspect de la présente invention sera expliqué par rapport à la figure 2. Un terminal détecte, pendant une étape 32 de détection, le code de la zone de localisation où le terminal se trouve. Si le code de la zone de localisation change, par exemple parce que le terminal se déplace, pendant une étape 31 de notification de changement de zone de localisation, le terminal mobile remonte l'information de la localisation courante (par exemple son code) à l'applet (e.g. par exemple le terminal mobile a quitté la cellule de service à une nouvelle cellule).
Pendant une étape 35 de comparaison, l'applet compare le code de la zone de localisation reçue du réseau cellulaire public macro et le code de la zone de la localisation enregistrée dans la carte d'identification d'abonné. Au lieu de comparer les codes des zones de localisation, l'applet peut également comparer la valeur de tout autre indicateur géographique reçue avec sa valeur correspondante enregistré.

Si les codes des deux zones de localisation (ou autre indicateur géographique) sont identiques l'applet passe à l'étape 40.

### Etape 40.

Le cas présent se produira quand le terminal mobile entrera (dans la zone de localisation qui se trouve) à proximité de la passerelle résidentielle de l'abonné. Le réseau cellulaire public macro à ce moment diffuse au terminal mobile la zone de localisation courante où il se trouve. La zone de localisation reçue du réseau cellulaire public macro est remontée à l'applet par le terminal mobile. Puisque cette zone de localisation a été préalablement enregistrée dans la mémoire de la carte d'identification d'abonné (étape 23) la comparaison effectué par l'applet (étape 35) sera donc positif. Pendant l'étape 40 de balayage, l'applet lance une autre opération de balayage radio afin de récupérer la liste des réseaux cellulaires publics disponibles i.e. l'applet envoie une requête au terminal mobile afin de commander la fonction radio qui permet de faire le balayage radio. L'opération de balayage radio est périodique de période T minutes ajustable et variable.

Si, pendant l'étape 35 de comparaison, il paraît que les deux zones de localisation sont différentes, l'applet passe à une étape 36 de vérification suivante. Pendant cette étape 36, l'applet vérifie si l'étape 40 est active.
Si c'est le cas, alors l'applet, pendant une étape 38 de désactivation, désactive l'étape 40 et passe à l'étape 32. La raison est la suivante: si l'étape 40 est active, ceci revient à dire que le terminal mobile vient de quitter la zone de localisation qui couvre sa passerelle résidentielle vers une nouvelle zone i.e. l'abonné s'éloigne de sa résidence.
Si le résultat de la vérification pendant l'étape 36 est négatif, l'applet passe à l'étape 32. Dans ce cas, le terminal mobile ne se trouvait pas précédemment dans la zone de localisation qui couvre sa passerelle résidentielle parce que l'étape 40 n'est pas active i.e. l'abonné déambule loin de la zone de localisation qui couvre sa passerelle résidentielle et a changé de zone de localisation vers une nouvelle.

Pendant une étape 41, l'applet vérifie si le réseau cellulaire public associé aux passerelles résidentielles est disponible. Si c'est le cas, l'applet passe à l'étape 50. Sinon, l'applet repasse à l'étape 40.
Pendant l'étape 50, l'applet déclenche la procédure de sélection du réseau cellulaire public en mode manuel et le terminal mobile essaye de s'enregistrer à la passerelle résidentielle.
Pendant l'étape 51, le terminal mobile essaye de s'enregistrer à la passerelle résidentielle si la sélection du réseau cellulaire public associé aux passerelles résidentielles se déroule avec succès (i.e. c'est-à-dire que le terminal mobile sélectionne avec succès le réseau cellulaire public associé aux passerelles résidentielles, s'enregistre au réseau cellulaire public associé aux passerelles résidentielles avec succès, s'attache, pendant un étape 54 d'attachement, à la passerelle résidentielle avec succès (i.e. le contrôle d'accès a été positif) et notifie sa nouvelle zone de localisation au réseau cellulaire public associé aux passerelles résidentielles).
Si l'essai de sélection de la passerelle résidentielle échoue, le terminal mobile sera rejeté de la passerelle résidentielle. Le rejet se déroule pendant une étape 53 de rejet. La cause d'échec sera la suivante: cause de rejet numéro 15 "Pas de Cellules Appropriée Dans La Zone De Localisation, ou en anglais: rejection cause number 15 "No Suitable Cells in Location Area". L'applet sera notifiée de l'échec de l'opération de sélection et déclenchera la procédure de sélection du réseau cellulaire public en mode automatique. L'applet passe ensuite à l'étape 40.

Pendant une étape 55, la couverture de la cellule définie par la passerelle résidentielle est perdue, l'applet passe à l'étape 60. La couverture de la passerelle peut disparaître, par exemple, dans le cas où l'utilisateur du terminal après avoir enregistré dans son terminal la zone de localisation à proximité de la passerelle pendant l'étape 23 comme décrit ci-dessus s'éloigne avec son terminal de cette passerelle. Une autre possibilité pourrait être que la passerelle tombe en panne. Dans tous ces cas, l'applet passe à l'étape 60.

### Etape 60.

Pendant l'étape 60, l'applet déclenche la procédure de sélection du réseau cellulaire public en mode automatique ce qui veut dire que le terminal s'attachera au réseau cellulaire public macro. L'applet passera après à l'étape 32.

L'invention sera décrite avec davantage de détails ci-après.
Concernant les étapes 31 et 35, une solution est d'utiliser le mécanisme des cartes d'identification d'abonné proactives, en anglais: USIM Application Toolkit (USAT), de déclaration des événements auprès du terminal mobile afin de déclarer l'événement "location status event" (voir la spécification 3GPP TS 31.111). La commande proactive "SET UP EVENT LIST" permet à la carte d'identification d'abonné d'envoyer une liste d'événements au terminal mobile. Lorsque l'un des événements définis dans cette liste se produit le terminal mobile doit remonter à la carte d'identification d'abonné une enveloppe contenant les informations relatives à cet événement (i.e. si le terminal mobile a reçu préalablement la commande "SET UP EVENT LIST").

Si l'applet inclut l'événement "location status event" dans la liste qu'elle envoie au terminal mobile dans la proactive commande "SET UP EVENT LIST" alors le terminal mobile, lorsqu'il passe à l'état de veille avec la donnée que sa localisation a changé ou a été mise à jour, remontera l'information de la nouvelle localisation à la carte d'identification d'abonné en utilisant l'enveloppe "ENVELOPE EVENT DOWNLOAD - location status". Cette enveloppe est envoyée du terminal mobile vers la carte d'identification d'abonné et contient les informations suivantes:
- "Location status": ce champ contient l'état du service courant du terminal mobile e.g. 'Service Normal', 'Urgence Seulement'
- "Location information": ce champ contient le détail de l'événement i.e. la zone de localisation et la cellule radio qui ont été sélectionnées par le terminal mobile. Ces informations sont incluses dans l'enveloppe uniquement si l'état du service affiche 'Service normal'.
L'information de localisation contient les champs suivants:
- Le code de territoire et le code du réseau cellulaire public, ou en anglais: Mobile Country code and Mobile Network Codes (MCC & MNC)
- le code de la zone de localisation, ou en anglais: Location Area Code (LAC)
- la valeur de l'identificateur de la cellule, ou en anglais: Cell Identity Value (Cell ID)

L'applet recevant l'enveloppe "ENVELOPE EVENT DOWNLOAD - location status", effectue un contrôle sur la zone de localisation remontée du réseau cellulaire public macro et la zone de localisation enregistrée dans la carte d'identification d'abonné. Si les deux zones de localisation sont identiques, i.e. l'abonné est à proximité de sa résidence et par conséquent de sa passerelle résidentielle du type système de télécommunication mobile universel, l'applet commence à exécuter l'étape 40.

La commande proactive "RUN AT COMMAND" a été définie (voir la spécification 3GPP TS 31.111) afin de permettre l'encapsulation d'une commande AT. Comme il sera connu par l'homme du métier, les commandes AT sont utilisées par un équipement terminal, ou en anglais: Terminal Equipment (TE) par exemple un ordinateur personnel, afin de piloter et contrôler les fonctions d'un autre équipement terminal, par exemple un modem. De la même manière, la carte d'identification d'abonné peut utiliser la commande proactive "RUN AT COMMAND" afin de faire exécuter une commande AT par le terminal mobile. Ceci permet à la carte d'identification d'abonné de piloter et de contrôler le terminal mobile et les services d'un réseau cellulaire public du type système de télécommunication mobile universel. Le terminal mobile recevant la commande proactive "RUN AT COMMAND", procède à l'exécution de la commande AT (i.e. encapsulée dans la commande "RUN AT COMMAND"). Le terminal mobile acquitte la commande proactive "RUN AT COMMAND" en envoyant la réponse "TERMINAL RESPONSE". Cette réponse contient la réponse à la commande AT. La réponse à la commande AT peut avoir trois familles de valeurs: "OK", "ERROR", ou les paramètres demandés par la commande AT.

Concernant les étapes 15, 19, 21, 25, 40, 50, 51, 53 et 60 décrits ci-dessus, l'utilisation de la proactive commande "RUN AT COMMAND" permet à une applet provisionnée dans la carte d'identification d'abonné de déclencher les deux opérations suivantes: (i) opération du balayage radio et (ii) le déclenchement de la sélection du réseau cellulaire public en mode manuel ou automatique. Ces opérations nécessitent l'utilisation des fonctions radio du terminal mobile. La partie connue en anglais sous l'expression: Mobile Terminal (MT) du terminal mobile est responsable des fonctions radio.
La commande AT; "+COPS" (voir la spécification 3GPP TS 27.007) permet de déclencher les opérations suivantes:
I. Sélection d'un réseau cellulaire public en mode manuel ou en mode automatique
II. Notification à la carte d'identification d'abonné du réseau cellulaire public sélectionné par le terminal mobile
III. Scan du réseau radio à un instant donné et notification des réseaux cellulaires publics disponibles

Lorsque l'accès au service du type système de télécommunication mobile universel est refusé à un terminal mobile sur une passerelle résidentielle donnée le terminal mobile est rejeté sur le réseau cellulaire public macro. L'applet doit être notifiée du résultat des tentatives d'enregistrement qui échouent afin qu'elle puisse exécuter la logique appropriée i.e. le lancement de la sélection du réseau cellulaire public en mode automatique.
D'un autre part, lorsque le terminal mobile perd la couverture de la cellule définie par la passerelle résidentielle, l'applet doit être notifiée de cet événement afin qu'elle puisse exécuter la logique appropriée i.e. le lancement de la sélection du réseau cellulaire public en mode automatique.
La commande AT "+CREG" (voir la spécification 3GPP TS 27.007) a été définie afin de permettre de remonter ces notifications à un équipement terminal et par conséquent à une applet utilisant le mécanisme d'encapsulation des commandes AT (i.e. la transaction constituée de la proactive commande "RUN AT COMMAND" et la réponse "TERMINAL RESPONSE").
L'exemple suivant décrit le mécanisme d'encapsulation d'une commande AT dans une commande proactive "RUN AT COMMAND" afin de piloter les fonctions du terminal mobile depuis une applet provisionnée dans la carte d'identification d'abonné:
L'applet envoie périodiquement des commandes au terminal mobile afin de forcer l'exécution du balayage radio et la notification des réseaux cellulaires publics disponibles:
1- "AT +COPS=?"
Cette commande AT est encapsulée dans la proactive commande RUN AT COMMAND. La commande est envoyée de la carte d'identification d'abonné vers le terminal mobile périodiquement.
L'interprétation de cette commande est la suivante:
Exécuter le balayage radio et notifier les réseaux cellulaires publics disponibles dans le réseau radio.
L'hypothèse prise dans le cas présent est la suivante: le terminal mobile est sous la couverture radio de la passerelle résidentielle du type système de télécommunication mobile universel. Le terminal mobile est également couvert par l'antenne du réseau cellulaire public macro du type système de télécommunication mobile universel.
1'- "+COPS: (2, "ORANGE"),( 1, "ORANGE AT HOME" )"
Cette AT réponse est encapsulée dans l'enveloppe "TERMINAL RESPONSE". L'enveloppe est envoyée du terminal mobile à la carte d'identification d'abonné. L'interprétation de la réponse AT est la suivante:
- (2, "ORANGE") : le réseau cellulaire public sélectionné par le terminal mobile est le réseau "ORANGE" i.e. le réseau cellulaire public macro du type système de télécommunication mobile universel de l'opérateur orange (2 est la valeur du paramètre "stat" qui indique la disponibilité de l'opérateur. Dans le cas présent, ce paramètre indique que le réseau "ORANGE" est le réseau sélectionné par le terminal mobile)
- (1, "ORANGE AT HOME"): le réseau "ORANGE AT HOME" est disponible i.e. le réseau cellulaire public associé à la passerelle résidentielle du type système de télécommunication mobile universel (1 est la valeur du paramètre "stat" qui indique la disponibilité de l'opérateur. Dans le cas présent, ce paramètre indique que le réseau cellulaire public associé à la passerelle résidentielle du type système de télécommunication mobile universel est disponible i.e. le terminal mobile est sous la couverture radio de la cellule définie par la passerelle résidentielle).
Le scenario suivant décrit l'utilisation des deux commandes AT: +CREG et +COPS, pour forcer le terminal mobile à s'attacher à la passerelle résidentielle du type système de télécommunication mobile universel. Il présente les mécanismes utilisés dans l'invention:
Etat initial: l'applet est provisionnée et activée dans la carte d'identification d'abonné.
L'applet démarre l'exécution de la logique du service en envoyant au terminal mobile la commande proactive "RUN AT COMMAND". Cette commande encapsule la commande AT "+CREG=1" qui forcera le terminal mobile à remonter à l'applet les notifications des événements suivants:
(i) le terminal mobile s'est enregistré à un nouveau réseau cellulaire public
(ii) le terminal mobile s'est détaché du réseau cellulaire public sélectionné, lorsque ces événements se produisent. De cette façon, le terminal mobile notifiera l'applet à chaque fois qu'il effectue un enregistrement à un nouveau réseau cellulaire public. Le terminal mobile notifiera également l'applet à chaque fois qu'il se détache d'un réseau cellulaire public. Le terminal mobile, grâce à cette commande, notifiera l'applet du résultat de la tentative d'attachement au réseau cellulaire public associé aux passerelles résidentielles du type système de télécommunication mobile universel. Le terminal mobile remontera également une notification à l'applet lorsqu'il perdra la couverture de la cellule définie par passerelle résidentielle sur laquelle il est enregistré.

Déclencher la notification du résultat des prochaines sélections du réseau cellulaire public ainsi que les prochains détachements du réseau cellulaire public:
1- "AT +CREG=1"
Cette commande AT est encapsulée dans la proactive commande "RUN AT COMMAND". La commande est envoyée de la carte d'identification d'abonné au terminal mobile.
L'interprétation de cette commande est la suivante:
L'applet force le terminal mobile, à l'aide de cette commande, de reporter le résultat du déroulement de ses prochains enregistrements à un nouveau réseau cellulaire public ou du prochain détachement du réseau cellulaire public sélectionné.
1'-"OK"
Cette AT réponse est encapsulée dans l'enveloppe "TERMINAL RESPONSE". L'enveloppe est envoyée du terminal mobile à la carte d'identification d'abonné. L'applet envoie ensuite des requêtes périodiques au terminal mobile afin de déclencher la recherche radio des réseaux cellulaires publics disponibles. À cette étape de l'exécution de la logique du service de l'applet, l'applet n'a aucune information de localisation de la passerelle résidentielle du type système de télécommunication mobile universel de l'abonné. L'objectif est donc de lancer des recherches périodiques et de tenter de s'enregistrer aux passerelles résidentielles du type système de télécommunication mobile universel qui deviennent disponible. Au premier enregistrement réussi, l'applet doit enregistrer (i.e. armer) la zone de localisation courante dans la mémoire de la carte d'identification d'abonné afin de l'utiliser lors des prochaines sélections de la passerelle.
Lorsque l'enregistrement au réseau cellulaire public réussit, cela veut dire que l'abonné a le droit d'accéder aux services système de télécommunication mobile universel depuis la passerelle résidentielle sélectionnée et par conséquent que l'abonné se trouve dans sa résidence.
L'hypothèse prise dans le cas présent est la suivante: le terminal mobile n'a pas encore trouvé une couverture radio d'une cellule définie par une passerelle résidentielle. Le terminal mobile est sous la couverture radio du réseau cellulaire public macro du type système de télécommunication mobile universel.
Opération de balayage radio
2- "AT +COPS=?"
Cette commande AT est encapsulée dans la proactive commande "RUN AT COMMAND". La commande est envoyée de la carte d'identification d'abonné au terminal mobile.
L'interprétation de cette commande est la suivante:
L'applet commande le terminal mobile afin qu'il scan le réseau radio et qu'il remonte les réseaux cellulaires disponibles.
2'- "+COPS: (2, "ORANGE")"
Cette AT réponse est encapsulée dans l'enveloppe "TERMINAL RESPONSE". L'enveloppe est envoyée du terminal mobile à la carte d'identification d'abonné. L'interprétation de la réponse AT est la suivante:
(2, "ORANGE"): le réseau cellulaire public sélectionné par le terminal mobile est le réseau "ORANGE" i.e. le réseau cellulaire public macro du type système de télécommunication mobile universel de l'opérateur orange (2 est la valeur du paramètre "stat" qui indique la disponibilité de l'opérateur. Dans le cas présent, ce paramètre indique que le réseau cellulaire public "ORANGE" est le réseau sélectionné par le terminal mobile) L'applet a été donc notifiée que l'opérateur présent dans le réseau radio est l'opérateur "ORANGE". Le réseau cellulaire public associé aux passerelles résidentielles du type système de télécommunication mobile universel n'est pas encore disponible.
L'applet recommence l'opération de balayage radio après T minutes. L'applet n'arrêtera l'activité de balayage radio que lorsqu'une passerelle résidentielle du type système de télécommunication mobile universel devient disponible.
L'hypothèse prise dans le cas présent est la suivante: le terminal mobile a trouvé une couverture radio d'une cellule définie pas une passerelle résidentielle. Le terminal mobile est également sous la couverture radio du réseau cellulaire public macro du type système de télécommunication mobile universel.
3- "AT +COPS=?"
Cette commande AT est encapsulée dans la proactive commande "RUN AT COMMAND". La commande est envoyée de la carte d'identification d'abonné au terminal mobile.

L'interprétation de cette commande est la suivante:
L'applet commande le terminal mobile afin qu'il scan le réseau radio et qu'il remonte les réseaux cellulaire publics disponible
3'- "+COPS:(2, "ORANGE"),( 1, "ORANGE AT HOME" )"
Cette AT réponse est encapsulée dans l'enveloppe "TERMINAL RESPONSE". L'enveloppe est envoyée du terminal mobile à la carte d'identification d'abonné. L'interprétation de la réponse AT est la suivante:
(2, "ORANGE"): le réseau cellulaire public sélectionné par le terminal mobile est le réseau "ORANGE" i.e. le réseau cellulaire public macro du type système de télécommunication mobile universel de l'opérateur orange (2 est la valeur du paramètre "stat" qui indique la disponibilité de l'opérateur. Dans le cas présent, ce paramètre indique que le réseau "ORANGE" est le réseau sélectionné par le terminal mobile)
(1, "ORANGE AT HOME"): le réseau cellulaire public "ORANGE AT HOME" est disponible i.e. le réseau cellulaire public associé à la passerelle résidentielle du type système de télécommunication mobile universel (1 est la valeur du paramètre "stat" qui indique la disponibilité de l'opérateur. Dans le cas présent, ce paramètre indique que le réseau cellulaire public associé à la passerelle résidentielle du type système de télécommunication mobile universel est disponible i.e. le terminal mobile est sous la couverture radio de la cellule définie par la passerelle résidentielle)
L'applet a été donc notifiée de la présence d'une passerelle résidentielle du type système universel de télécommunication mobile. L'applet commande le terminal mobile afin de déclencher la sélection du réseau cellulaire public en mode manuel; de la même manière que le déclenchement par l'abonné de la procédure de sélection manuelle. L'hypothèse prise dans le cas présent est la suivante: l'abonné n'est pas autorisé à accéder aux services système de télécommunication mobile universel depuis la passerelle résidentielle sélectionnée.
Déclenchement de la sélection du réseau cellulaire public en mode manuel par l'applet:
4- "AT COPS= 1, 0, "ORANGE AT HOME" "
Cette commande AT est encapsulée dans la proactive commande "RUN AT COMMAND". La commande est envoyée de la carte d'identification d'abonné au terminal mobile.
L'interprétation de cette commande est la suivante:
"AT COPS= ()" : Cette requête commande le terminal mobile afin qu'il déclenche la sélection du réseau cellulaire public

### Les paramètres:

1: La sélection du réseau cellulaire public doit être en mode manuel
0: Le format du nom de l'opérateur que le terminal mobile doit sélectionner est codé en codage alphanumérique long
"ORANGE AT HOME": le nom de l'opérateur que le terminal mobile doit sélectionner codé en codage alphanumérique long

Parce que l'abonné n'est pas autorisé à accéder aux services système de télécommunication mobile universel depuis la passerelle résidentielle sélectionnée, la sélection du réseau cellulaire public en mode manuel déclenchée précédemment par l'applet échouera et le terminal mobile sera rejeté. La cause du rejet sera la suivante: cause de rejet numéro 15 "Pas de Cellules Appropriée Dans La Zone De Localisation".
L'applet sera notifiée du résultat de l'enregistrement:
L'applet a précédemment armé le terminal mobile afin qu'il remonte le résultat de ces prochains enregistrement i.e. pendant la séquence 1- "AT +CREG= 1", le terminal mobile remontera donc à l'applet le résultat du déroulement de l'enregistrement:
1'- "+ CREG: 2"
Cette AT réponse est encapsulée dans l'enveloppe "TERMINAL RESPONSE". L'enveloppe est envoyée du terminal mobile à la carte d'identification d'abonné. L'interprétation de la réponse AT est la suivante:
2 est la valeur du paramètre "stat" qui indique que le terminal mobile s'est détaché du réseau cellulaire public macro du type système de télécommunication mobile universel i.e. réseau national orange.
Le terminal mobile tente de s'enregistrer au réseau cellulaire public associé à la passerelle résidentielle du type système de télécommunication mobile universel.
1'- "+ CREG: 3"
Cette AT réponse est encapsulée dans l'enveloppe "TERMINAL RESPONSE". L'enveloppe est envoyée du terminal mobile à la carte d'identification d'abonné. L'interprétation de la réponse AT est la suivante:
3 est la valeur du paramètre "stat" qui indique que l'enregistrement sur le réseau cellulaire public associé à la passerelle a échoué (car l'abonné n'est pas autorisé sur cette passerelle résidentielle et le terminal a été rejeté durant le processus de control d'accès la cause du rejet est la suivante: cause de rejet numéro 15 "Pas de Cellules Appropriée Dans La Zone de Localisation").
L'applet est donc notifiée que la tentative de sélection de réseau cellulaire public, initiée par l'applet précédemment, a échoué. L'applet envoie ensuite une requête au terminal mobile afin de débloquer le mode manuel de la sélection de réseau cellulaire public i.e. l'applet commande le terminal mobile en déclenchant une sélection de réseau cellulaire public en mode automatique (i.e. afin d'éviter que le terminal mobile reste bloqué sur le réseau public cellulaire associé à la passerelle résidentielle du type système de télécommunication mobile universel). Cette requête entrainera le déclenchement de la procédure de sélection du réseau cellulaire public en mode automatique telle que définie dans la spécification 3GPP TS 23.122.
Déclenchement de sélection du réseau cellulaire public en mode automatique par l'applet:
5- "AT COPS= 0"
Cette commande AT est encapsulée dans la proactive commande "RUN AT COMMAND". La commande est envoyée de la carte d'identification d'abonné au terminal mobile.
L'interprétation de cette commande est la suivante:
L'applet déclenche la procédure de sélection du réseau cellulaire public en mode automatique
5'- "OK"
Le réseau cellulaire public étant le réseau cellulaire public de domicile de l'abonné, le terminal mobile, dés lors qu'il identifie le réseau cellulaire public dans les informations diffusées via les antennes du réseau cellulaire public macro, sélectionnera le réseau cellulaire public macro et s'enregistrera sur la première cellule appropriée qu'il trouvera. Le terminal mobile déclare ensuite sa position au réseau cellulaire public macro durant la procédure de mise à jour de localisation et accède aux services type système de télécommunication mobile universel via l'antenne du réseau cellulaire public macro. L'applet lancera une nouvelle fois la recherche périodique du réseau cellulaire public associé aux passerelles résidentielles après T minutes.
Quand une passerelle résidentielle devient disponible l'applet lancera une sélection du réseau cellulaire public en mode manuel. L'opération est décrite dans la séquence 4. L'hypothèse prise dans le cas présent est la suivante: l'abonné est autorisé à accéder aux services du type système de télécommunication mobile universel depuis la passerelle résidentielle sélectionnée. Dans ce cas, la sélection manuelle du réseau cellulaire public se déroulera avec succès: le terminal mobile sélectionnera le réseau cellulaire public associé à la passerelle, en mode manuel. L'opération est décrite dans les spécifications 3GPP TS 22.011 et TS 23.122. Le terminal mobile sélectionnera donc le réseau cellulaire public associé à la passerelle résidentielle, et ensuite sélectionnera la cellule définie par la passerelle résidentielle et déclarera ensuite sa position au réseau cellulaire public associé à la passerelle résidentielle durant la procédure de mise à jour de localisation.
L'applet est notifiée du résultat de l'enregistrement.
L'applet a précédemment armé le terminal mobile afin qu'il remonte le résultat de ces prochains enregistrement i.e. pendant la séquence 1- "AT +CREG= 1", le terminal mobile remontera donc à l'applet le résultat du déroulement de l'enregistrement:
1'- "+ CREG: 2"
Cette AT réponse est encapsulée dans l'enveloppe "TERMINAL RESPONSE". L'enveloppe est envoyée du terminal mobile à la carte d'identification d'abonné. L'interprétation de la réponse AT est la suivante:
Le terminal mobile est détaché du réseau cellulaire public macro du type système de télécommunication mobile universel
1'- "+ CREG: 5"
Cette AT réponse est encapsulée dans l'enveloppe "TERMINAL RESPONSE". L'enveloppe est envoyée du terminal mobile à la carte d'identification d'abonné. L'interprétation de la réponse AT est la suivante:
Le terminal mobile est enregistré, le terminal mobile est en situation d'itinérance nationale
Vérification du réseau cellulaire public sélectionné et le mode de sélection du réseau cellulaire public:
6- "AT+COPS?"
Cette commande AT est encapsulée dans la proactive commande "RUN AT COMMAND". La commande est envoyée de la carte d'identification d'abonné au terminal mobile.
L'interprétation de cette commande est la suivante:
Remonter le mode courant de la sélection du réseau cellulaire public (i.e. manuel ou automatique) et le réseau cellulaire public sélectionné
6'- "+COPS: 1 , 0, "ORANGE AT HOME" "
Cette AT réponse est encapsulée dans l'enveloppe "TERMINAL RESPONSE". L'enveloppe est envoyée du terminal mobile à la carte d'identification d'abonné. L'interprétation de la réponse AT est la suivante:
Le réseau cellulaire public sélectionné est "ORANGE AT HOME" i.e. réseau cellulaire public associé à la passerelle résidentielle du type système de télécommunication mobile universel,
1 est la valeur du paramètre "mode" indiquant ici que le mode manuel de sélection réseau cellulaire public est armé.
L'abonné est désormais connecté au réseau cellulaire public associé aux passerelles résidentielles du type système de télécommunication mobile universel via sa passerelle résidentielle. L'applet enregistre dans la carte d'identification d'abonné la zone de localisation courante. Cette zone de localisation est celle du réseau cellulaire public macro. Cette zone de localisation sera utilisée pour déclencher les prochaines sélections du réseau cellulaire public associé aux passerelles résidentielles (i.e. c'est-à-dire que durant les prochaines sélections de sa passerelle résidentielle l'activité de balayage radio et de la sélection du réseau cellulaire public associé aux passerelles résidentielles ne seront déclenchées que lorsque le terminale mobile entre dans la zone de localisation enregistrée dans la carte d'identification d'abonné). L'applet ne procédera jamais automatiquement à l'enregistrement d'une autre zone de localisation. L'abonné peut néanmoins déclencher manuellement cette logique afin d'armer une autre zone de localisation.
L'abonné commence donc à utiliser ses services du type système de télécommunication mobile universel via sa passerelle résidentielle.
Le terminal mobile perd la couverture de la cellule définie par la passerelle résidentielle: L'applet a précédemment armé le terminal mobile afin qu'il remonte le résultat de ces prochains détachements i.e. pendant la séquence 1- "AT +CREG= 1", le terminal mobile remontera donc à l'applet le détachement du terminal mobile du réseau associé aux passerelles résidentielles:
1'- "+ CREG: 2"
Cette AT réponse est encapsulée dans l'enveloppe "TERMINAL RESPONSE". L'enveloppe est envoyée du terminal mobile à la carte d'identification d'abonné. L'interprétation de la réponse AT est la suivante:
Le terminal mobile est détaché du réseau cellulaire public associé aux passerelles résidentielles du type système de télécommunication mobile universel.
L'applet est donc notifiée que le terminal mobile n'est plus couvert par la cellule définie par la passerelle résidentielle. L'applet lancera donc une procédure de sélection du réseau cellulaire public en mode automatique.
Déclenchement de la sélection du réseau cellulaire public en mode automatique par l'applet:
7- "AT COPS= 0"
Cette commande AT est encapsulée dans la proactive commande "RUN AT COMMAND". La commande est envoyée de la carte d'identification d'abonné au terminal mobile.
L'interprétation de cette commande est la suivante:
L'applet déclenche la procédure de sélection du réseau cellulaire public en mode automatique
7'- OK
Le terminal mobile s'enregistre au réseau cellulaire public macro du type système de télécommunication mobile universel avec succès. L'applet a précédemment armé le terminal mobile afin qu'il remonte le résultat de ces prochains enregistrements i.e. pendant la séquence 1- "AT +CREG= 1 ", le terminal mobile remontera donc à l'applet le résultat du déroulement de l'enregistrement du terminal mobile au réseau cellulaire public macro:
1 '- "+ CREG:1"
Cette AT réponse est encapsulée dans l'enveloppe "TERMINAL RESPONSE". L'enveloppe est envoyée du terminal mobile à la carte d'identification d'abonné. L'interprétation de la réponse AT est la suivante:
Le terminal mobile est enregistré au réseau cellulaire public de domicile de l'abonné, i.e. réseau cellulaire public macro du type système de télécommunication mobile universel de l'opérateur orange
Vérification du réseau cellulaire public sélectionné et le mode de sélection du réseau cellulaire public:
8- "AT+COPS?"
Cette commande AT est encapsulée dans la proactive commande "RUN AT COMMAND". La commande est envoyée de la carte d'identification d'abonné au terminal mobile.
L'interprétation de cette commande est la suivante:
Remonter le mode courant de la sélection du réseau cellulaire public (i.e. manuel ou automatique) et le réseau cellulaire public sélectionné.
8'- "+COPS: 0,0, "ORANGE " "
Cette AT réponse est encapsulée dans l'enveloppe "TERMINAL RESPONSE". L'enveloppe est envoyée du terminal mobile à la carte d'identification d'abonné. L'interprétation de la réponse AT est la suivante:
Le réseau cellulaire public sélectionné est "ORANGE" i.e. réseau cellulaire public macro du type système de télécommunication mobile universel de l'opérateur orange, 0 est la valeur du paramètre "mode" indiquant ici que le mode automatique de sélection du réseau cellulaire public est armé.
État après la séquence 8: la zone de localisation, qui définit un indicateur de localisation de la passerelle résidentielle du type système de télécommunication mobile universel, est enregistrée et armée dans la carte d'identification d'abonné.
Quand l'abonné se trouve de nouveau à proximité de sa résidence, le terminal mobile étant toujours en train de remonter les changements de localisation à l'applet, l'applet effectuera le contrôle entre la zone de localisation remontée du réseau et la zone de localisation enregistrée dans la mémoire de la carte d'identification de l'abonné et trouvera les deux localisations identiques i.e. le terminal mobile se trouve dans la zone de localisation à proximité de la passerelle résidentielle de l'abonné. L'applet activera ensuite le balayage radio et dés lors que la couverture radio de la cellule définie par la passerelle résidentielle deviendra disponible l'applet lancera une sélection du réseau cellulaire public en mode manuel.
La recherche périodique continue dans le temps de la passerelle résidentielle du type système de télécommunication mobile universel est faite une seule fois au début du processus. L'applet après son activation ne connaît pas la zone de localisation qui couvre la passerelle résidentielle du type système de télécommunication mobile universel de l'abonné. Durant le premier enregistrement du terminal mobile au réseau cellulaire public associé à la passerelle résidentielle, l'applet enregistrera la zone de localisation dans la carte d'identification d'abonné et l'armera afin de l'utiliser comme déclencheurs lors des prochaines sélections i.e. la recherche périodique de la passerelle ne sera donc plus continue dans le temps après cette étape parce que l'applet ne lancement le balayage radio périodique que lorsque le terminal mobile entre dans la zone de localisation enregistrée dans la carte d'identification d'abonné. L'applet ne va jamais déclencher automatiquement une recherche périodique continue dans le temps et l'armement d'une zone de localisation. Après la première exécution de l'applet et l'armement de la première zone de localisation, l'applet déclenchera le balayage radio périodique uniquement quand le terminal mobile entre dans la zone de localisation considérée comme à proximité de la résidence de l'abonné.
Comme indiqué précédemment dans ce document, le système devrait permettre d'armer une autre zone de localisation afin de tenir en compte les utilisateurs ayant plusieurs points d'accès par exemple résidence principale et résidence secondaire. L'armement de cette zone de localisation doit être fait manuellement à la demande de l'abonné. L'armement d'une seconde zone de localisation permettra de lancer la logique appropriée (i.e. scan de la radio périodique et déclenchement de la sélection du réseau cellulaire public en mode manuel et retour en mode automatique à la perte de la couverture de la cellule définie par la passerelle résidentielle) uniquement si le terminal mobile entre dans l'une des zones de localisation armées dans la mémoire de la carte d'identification d'abonné. Un mécanisme des cartes d'identifications d'abonné proactives permet le rajout d'un item dans le menu du terminal mobile à l'aide de la commande proactive "SET UP MENU". Ce mécanisme permettra d'afficher à l'abonné un item supplémentaire dans le menu de son terminal mobile, par exemple "Enregistrer un nouveau accès", item qui apparaitra après l'activation de l'applet dans le carte d'identification d'abonné.
Quand l'abonné veut par exemple utiliser sa passerelle résidentielle du type système de télécommunication mobile universel depuis sa résidence secondaire, l'abonné sélectionnera l'item "Enregistrer un nouveau accès" du menu de son terminal mobile et le résultat de la sélection sera remonté à l'applet.
L'applet procédera donc à l'exécution des étapes 15, 17, 19, 21 et 25 définies au chapitre précédent. Après l'exécution, l'applet aura armé une deuxième zone de localisation qui correspond à la zone géographique qui couvre la résidence secondaire de l'abonné. Le balayage radio sera donc, après cet enregistrement, déclenché à chaque fois l'abonné approche de sa résidence principale ou de sa résidence secondaire.
Dans le cas ou l'abonné souhaite disposer d'une deuxième passerelle résidentielle, l'étape 10 devra être exécutée.

Quand l'abonné déménage ou change définitivement sa résidence, l'applet permettra également de supprimer une zone de localisation enregistrée. La commande proactive "SET UP MENU" permettra d'afficher à l'abonné un item supplémentaire dans le menu de son terminal mobile, par exemple " Supprimer un accès", item qui apparaitra après l'activation de l'applet dans le carte d'identification d'abonné.
Quand l'abonné déménage par exemple et quitte définitivement sa résidence principale, l'abonné sélectionnera l'item "Supprimer un accès" du menu de son terminal mobile et le résultat de la sélection sera remonté à l'applet. L'applet procédera, suite à la réception du terminal mobile de l'activité de l'abonné à savoir l'invocation de l'item "Supprimer un accès", dans le menu du terminal mobile, à l'édition des zone de localisations enregistrée dans la carte d'identification de l'abonné sur l'écran du terminal mobile de l'abonne. L'abonné choisit donc l'accès qu'il désire supprimer et l'applet procède à la suppression de la zone de localisation correspondante à l'accès sélectionné.

## Revendications

1. Procédé de connexion d'un terminal mobile à un réseau de communication via un dispositif associé, comprenant:
- une étape d'obtention (32) d'un identifiant représentatif d'une zone de localisation courante dans lequel se trouve le terminal mobile,
- une étape de balayage (40) radio en vue d'obtenir une liste de réseaux de communication disponibles,
- une étape de sélection (50) du réseau de communication associé audit dispositif en vue d'un attachement dudit terminal mobile au réseau sélectionné,
**caractérisé en ce que** le procédé comprend, lors d'une phase préalable à l'étape de balayage et en cas de succès d'une tentative d'attachement du terminal mobile audit réseau de communication via ledit dispositif, un enregistrement (23) d'un identifiant représentatif d'une zone de localisation dans laquelle se trouve ledit terminal mobile au moment de ladite tentative,
et **en ce que**, après ledit enregistrement, l'étape de balayage n'est déclenchée que lorsque l'identifiant représentatif de la zone de localisation courante est identique à l'identifiant enregistré pendant la phase préalable.

2. Procédé de connexion selon la revendication 1, comprenant pendant la phase préalable et en cas de succès d'une autre tentative d'attachement du terminal mobile audit réseau de communication via un autre dispositif, un enregistrement (23) d'un autre identifiant représentatif d'une zone de localisation dans laquelle se trouve ledit terminal mobile au moment de ladite autre tentative,
et dans lequel, après l'enregistrement dudit autre identifiant, l'étape de balayage n'est déclenchée que lorsque l'identifiant représentatif de la zone de localisation courante est identique à l'un des identifiants enregistrés pendant la phase préalable.

3. Procédé de connexion selon la revendication 1 ou 2, comprenant une étape de suppression d'un identifiant enregistré pendant la phase préalable, laquelle étape devant être exécutée sur requête d'un abonné.

4. Support de données sur lequel ont été mémorisées des instructions de code de programme aptes à provoquer une mise en oeuvre d'un procédé conforme à l'une quelconque des revendications 1 à 3, lorsque ledit programme est exécuté sur un ordinateur.

5. Terminal mobile comprenant:
- des moyens d'obtention (32) d'un identifiant représentatif d'une zone de localisation courante dans lequel se trouve le terminal mobile,
- des moyens de balayage (40) radio en vue d'obtenir une liste de réseaux de communication disponibles,
- des moyens de sélection (50) du réseau de communication associé audit dispositif en vue d'un attachement dudit terminal mobile au réseau sélectionné,
**caractérisé en ce que** le terminal mobile comprend en outre des moyens d'enregistrement, conçus pour être activés avant les moyens de balayage et pour enregistrer (23), en cas de succès d'une tentative d'attachement du terminal mobile audit réseau de communication via ledit dispositif, un identifiant représentatif d'une zone de localisation dans laquelle se trouve ledit terminal mobile au moment de ladite tentative,
et **en ce que**, après ledit enregistrement, les moyens de balayage ne sont activés que lorsque l'identifiant représentatif de la zone de localisation courante est identique à l'identifiant enregistré par les moyens d'enregistrement.

## Claims

1. Method for connecting a mobile terminal to a communication network via an associated device, comprising:
- a step (32) of obtaining an identifier representative of a current location area in which the mobile terminal is located,
- a radio scanning step (40) in order to obtain a list of available communication networks,
- a step (50) of selecting the communication network associated with said device with a view to attaching said mobile terminal to the selected network,
**characterized in that** the method comprises, preliminary to the scanning step and in case of the success of an attempt to attach the mobile terminal to said communication network via said device, a storage (23) of an identifier representative of a location area in which said mobile terminal is located at the moment of said attempt,
and **in that** the scanning step is triggered after said storage only when the identifier representative of the current location area is identical to the identifier stored during the preliminary phase.

2. Connection method according to Claim 1, comprising, during the preliminary step and in case of the success of an another attempt to attach the mobile terminal to said communication network via another device, a storage (23) of another identifier representative of a location area in which said mobile terminal is located at the moment of said other attempt,
and in which the scanning step is triggered after said storage of said another identifier only when the identifier representative of the current location area is identical to one of the identifiers stored during the preliminary phase.

3. Connection method according to Claim 1 or 2, comprising a step of deleting an identifier stored during the preliminary phase, said step having to be executed upon request from a subscriber.

4. Data medium on which are stored program code instructions suitable for causing a method conforming to any one of Claims 1 to 3 to be implemented when said program is executed on a computer.

5. Mobile terminal comprising:
- means (32) for obtaining an identifier representative of a current location area in which the mobile terminal is located,
- radio scanning means (40) in order to obtain a list of available communication networks,
- means (50) for selecting the communication network associated with said device with a view to attaching said mobile terminal to the selected network,
**characterized in that** the mobile terminal also comprises storage means, designed to be activated before the scanning means and to store (23), in case of the success of an attempt to attach the mobile terminal to said communication network via said device, an identifier representative of a location area in which said mobile terminal is located at the moment of said attempt,
and **in that** the scanning means are activated after said storage only when the identifier representative of the current location area is identical to the identifier stored by the storage means.

## Patentansprüche

1. Verfahren zur Verbindung eines mobilen Endgeräts mit einem Kommunikationsnetz über eine zugehörige Vorrichtung, das Folgendes umfasst:
- einen Schritt zum Erhalten (32) eines Identifizierers, der eine aktuelle Lokalisierungszone, in der sich das mobile Endgerät befindet, darstellt,
- einen Schritt zur Funkabtastung (40) im Hinblick auf das Erhalten einer Liste von verfügbaren Kommunikationsnetzen,
- einen Schritt zum Auswählen (50) des der Vorrichtung zugeordneten Kommunikationsnetzes im Hinblick auf eine Anbindung des mobilen Endgeräts an das ausgewählte Netz,
**dadurch gekennzeichnet, dass** das Verfahren in einer Phase vor dem Abtastschritt und im Fall eines Erfolgs eines Anbindungsversuchs des mobilen Endgeräts an das Kommunikationsnetz über die Vorrichtung eine Aufzeichnung (23) eines Identifizierers, der eine Lokalisierungszone darstellt, in der sich das mobile Endgerät im Moment des Versuchs befindet, umfasst,
und dass der Abtastschritt nach der Aufzeichnung erst ausgelöst wird, wenn der Identifizierer, der die aktuelle Lokalisierungszone darstellt, zum Identifizierer, der während der vorherigen Phase aufgezeichnet wurde, identisch ist.

2. Verbindungsverfahren nach Anspruch 1, das während der vorherigen Phase und im Fall des Erfolgs eines anderen Anbindungsversuchs des mobilen Endgeräts an das Kommunikationsnetz über eine andere Vorrichtung eine Aufzeichnung (23) eines anderen Identifizierers, der eine Lokalisierungszone darstellt, in der sich das mobile Endgerät im Moment des anderen Versuchs befindet, umfasst,
und bei dem der Abtastschritt nach der Aufzeichnung des anderen Identifizierers erst ausgelöst wird, wenn der Identifizierer, der die aktuelle Lokalisierungszone darstellt, zu einem der Identifizierer, die während der vorherigen Phase aufgezeichnet wurden, identisch ist.

3. Verbindungsverfahren nach Anspruch 1 oder 2, das einen Schritt zur Unterdrückung eines während der vorherigen Phase aufgezeichneten Identifizierers umfasst, wobei der Schritt auf Anforderung eines Teilnehmers ausgeführt werden muss.

4. Datenträger, auf dem Programmcodebefehle gespeichert wurden, die eine Ausführung eines Verfahrens nach einem der Ansprüche 1 bis 3 hervorrufen können, wenn das Programm auf einem Computer ausgeführt wird.

5. Mobiles Endgerät, das Folgendes umfasst:
- Mittel zum Erhalten (32) eines Identifizierers, der eine aktuelle Lokalisierungszone darstellt, in der sich das mobile Endgerät befindet,
- Mittel zur Funkabtastung (40) im Hinblick auf das Erhalten einer Liste von verfügbaren Kommunikationsnetzen,
- Mittel zum Auswählen (50) des der Vorrichtung zugeordneten Kommunikationsnetzes im Hinblick auf eine Anbindung des mobilen Endgeräts an das ausgewählte Netz,
**dadurch gekennzeichnet, dass** das mobile Endgerät außerdem Aufzeichnungsmittel umfasst, die entworfen sind, um vor den Abtastmitteln aktiviert zu werden, und um im Fall eines Erfolgs eines Anbindungsversuchs des mobilen Endgeräts an das Kommunikationsnetz über die Vorrichtung einen Identifizierer aufzuzeichnen (23), der eine Lokalisierungszone darstellt, in der sich das mobile Endgerät im Moment des Versuchs befindet,
und dass die Abtastmittel nach dem Aufzeichnen erst aktiviert werden, wenn der Identifizierer, der die aktuelle Lokalisierungszone darstellt, zu dem von den Aufzeichnungsmitteln aufgezeichneten Identifizierer identisch ist.
